# EUROPEAN PATENT SPECIFICATION

(11) **EP 4 345 318 B1**
(45) Date of publication and mention of the grant of the patent: **23.07.2025**
(21) Application number: 22315219.0
(22) Date of filing: 27.09.2022
(51) Int. Cl.: F16B 5/02, F16B 35/00, F16B 37/16, F16B 39/12

(54) **ADJUSTABLE SPACER**
EINSTELLBARER ABSTANDSHALTER
ENTRETOISE RÉGLABLE

(43) Date of publication of application: 03.04.2024
(73) Proprietor: AIRBUS HELICOPTERS DEUTSCHLAND GmbH, 86609 Donauwörth (DE); Airbus Helicopters, 13725 Marignane Cedex (FR)
(72) Inventor: Le Cadet, Yann, 86707 Westendorf (DE); Mora, Paul, 13410 Lambesc (FR)
(74) Representative: Pouillot, Laurent Pierre Paul

(56) References cited:
- EP-A1- 0 533 513
- EP-A1- 0 543 046
- WO-A1-2018/048890
- WO-A1-2019/195724
- US-A- 1 440 576
- US-A- 4 108 407
- US-A- 4 854 844
- US-B2- 7 588 386

## Description

The invention is related to an adjustable spacer for adjusting a spacing between a first component and a second component to a predefined distance.

In various application fields one or more first components and one or more second components need to be assembled in a predefined relationship with respect to each other. Such a predefined relationship may require adjustment of a spacing between the one or more first components and the one or more second components to a predefined distance, as the one or more first components and the one or more second components and, more generally, all manufactured components are subject to manufacturing tolerances and must be managed with respect to geometric tolerances and gaps.

By way of example, doorframes in fuselages of rotorcrafts must generally be fitted with tight tolerances into associated openings provided in the fuselages. However, distortion of the doorframes must be prevented as otherwise associated door panels may not be installed correctly in the doorframes.

More specifically, in order to prevent an inaccurate mounting of a doorframe to an opening in a fuselage of a given rotorcraft, an operator usually initially measures a gap present between the doorframe and the fuselage. This generally requires an initial assembly of the doorframe and the fuselage by the operator. The operator must then determine respective parts or shims to be used for closing the measured gap and, subsequently, arrange the respective parts or shims in the gap between the doorframe and the fuselage. This, however, requires disassembly of the doorframe from the fuselage by the operator and a subsequent re-assembly of the doorframe and the fuselage together with the respective parts or shims.

Frequently, laminated shims are used to enable a required adjustment of doorframes in openings of fuselages of rotorcrafts. Such laminated shims may also be referred to as "peelable", "peel-off" or "peel" shims and consist of laminated layers or foils which may be peeled-off and which may have a thickness of even only a few microns.

However, also the use of such laminated shims in an adjustment problem of the type described above and, more generally, in an adjustment problem that necessitates respect of existing tolerances between at least two different components, usually requires several steps including at least assembly of the different components, measurement of present gaps, disassembly of the different components, determination of a suitable thickness of respective laminated shims, adjustment of the suitable thickness of the laminated shims by peeling off layers or foils, and reassembly of the different components with the laminated shims.

The documents EP 0 533 513 A1, WO 2019/195724 A1, WO 2018/048890 A1, and US 4 108 407 A describe various fixing devices for fixing a component on a support by means of a threaded connection. Some of these fixing devices relate more particularly to fastening devices of the type comprising a clamping screw which passes through the component, and a threaded body which is screwed into a clamping thread connected to the support, wherein means for adjusting the axial position of the component relative to the support are provided.

Nevertheless, all these steps are time-consuming in production. They are even more time-consuming if the steps must be repeated, e. g. as a result of inaccurate measurements. Furthermore, any subsequent re-adjustment requires disassembly of the at least two different components as peeling off layers or foils from the laminated shims may only be done in disassembled state of the at least two different components.

The documents WO 2022/162090 A1, EP 3 915 870 A4, EP 3 983 288 A1, EP 3 476 714 A1, EP 3 239 038 A1, and EP 1 217 136 A3 describe various spacers or spacing mechanisms for adjustment of spacings between different components at predefined distances. However, all these different solutions are rather complex and cost-intensive.

It is, therefore, an object of the present invention to provide a new spacer for adjusting a spacing between a first component and a second component to a predefined distance, which enables adjustment of the spacing after assembly of the first and second components in a comparatively small period of time without requiring any measurements and whilst avoiding any disassembly of the first and second components.

This object is solved by an adjustable spacer for adjusting a spacing between a first component and a second component to a predefined distance, the adjustable spacer comprising the features of claim 1.

More specifically, according to the present invention an adjustable spacer for adjusting a spacing between a first component and a second component to a predefined distance comprises at least a support component, a spacing component, and a fixing component. The support component is configured to be rigidly mounted to the first component. The spacing component is movably mounted to the support component for adjusting positioning of the support component relative to the second component. Furthermore, the spacing component is embodied as a threaded sleeve with an outer thread and comprises tightening slits. The fixing component is configured for locking the spacing component on the support component after the positioning of the support component relative to the second component at the predefined distance.

Advantageously, the inventive adjustable spacer enables adjusting a spacing between a first component and a second component to a predefined distance after assembly of the first and second components in a comparatively small period of time without requiring any measurements and whilst avoiding any disassembly of the first and second components. In particular, adjusting of the spacing using the inventive adjustable spacer is simple and reliable, may be performed in any direction of the three-dimensional space that is enabled by the inventive adjustable spacer, and may easily and quickly be re-adjusted, if required.

In other words, adjusting of the spacing is at any time reversible in any direction enabled by the inventive adjustable spacer. This leads to a significant reduction of time required for the adjusting of the spacing and, thus, to a significant reduction of costs.

According to a preferred embodiment, the support component comprises a support body supporting the spacing component, and at least one attachment portion configured to be rigidly mounted to the first component.

According to a further preferred embodiment, the support body is embodied as a support ring with an inner thread.

According to a further preferred embodiment, the at least one attachment portion is embodied as an attachment flange with at least one associated through hole configured to receive attachment means, in particular attachment screws or bolts.

According to a further preferred embodiment, the fixing component is embodied as a counter nut with an inner thread.

According to a further preferred embodiment, the fixing component is removable to enable re-adjustment of the positioning of the support component relative to the second component to increase/decrease the predefined distance.

According to a further preferred embodiment, the adjustable spacer further comprises a mounting component configured for rigidly mounting the spacing component to the second component after the locking of the spacing component on the support component.

Thus, a suitable load transfer between the first and second components may be enabled.

According to a further preferred embodiment, the mounting component is removable to enable re-adjustment of the positioning of the support component relative to the second component to increase/decrease the predefined distance.

According to a further preferred embodiment, the mounting component is embodied as a mounting screw.

According to a further preferred embodiment, the adjustable spacer further comprises a retaining element configured for retaining the mounting component on the spacing component.

According to a further preferred embodiment, the retaining element is embodied as a washer.

According to a further preferred embodiment, the support component, the spacing component, and the fixing component are exchangeable.

The present invention is further related to an arrangement comprising a first component, a second component, and an adjustable spacer as described above for adjusting a spacing between the first component and the second component to a predefined distance.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective exploded view of an adjustable spacer according to the present invention, with a support component, a spacing component, a fixing component, and a mounting component,
- Figure 2 shows a perspective view of the support component and the spacing component of Figure 1, and
- Figure 3 to Figure 5 show cut views of an illustrative utilization of the adjustable spacer of Figure 1 for adjusting a spacing between a first component and a second component to a predefined distance.

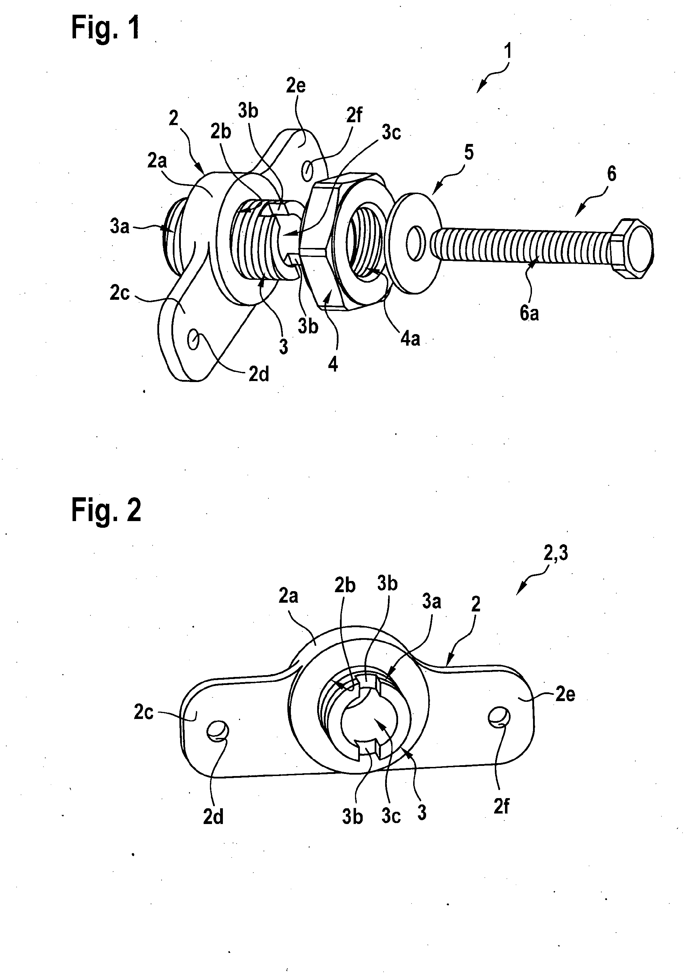

Figure 1 shows an adjustable spacer 1 according to the present invention, which comprises at least a support component 2, a spacing component 3, and a fixing component 4. Preferably, the support component 2, the spacing component 3, and the fixing component 4 are exchangeable.

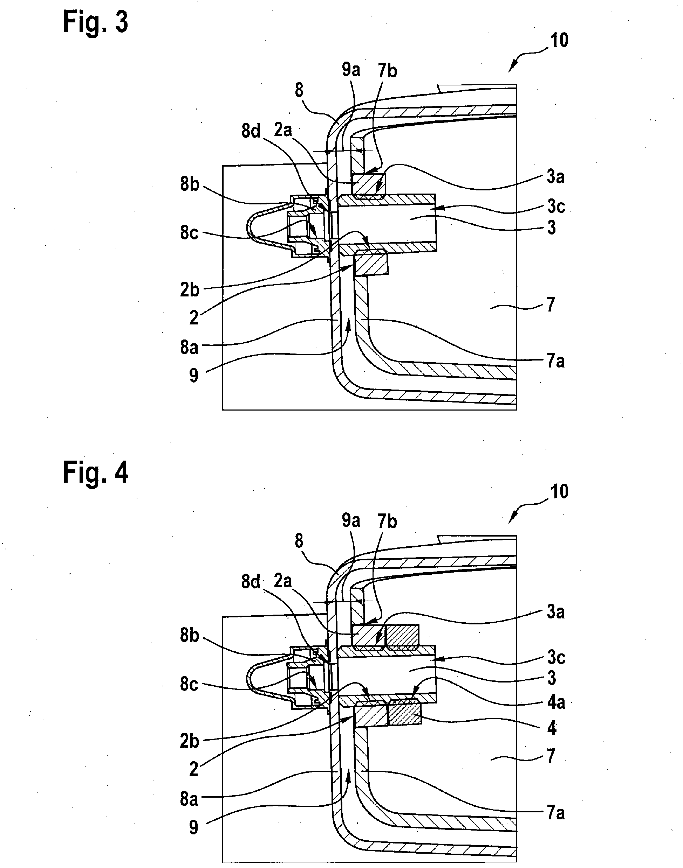

More specifically, the support component 2 is configured to be rigidly mounted to a first component (7 in Figure 3 to Figure 5). The spacing component 3 is movably mounted to the support component 2 for adjusting positioning of the support component 2 relative to a second component (8 in Figure 3 to Figure 5). The fixing component 4 is configured for locking the spacing component 3 on the support component 2 after the positioning of the support component 2 relative to the second component (8 in Figure 3 to Figure 5) at a predefined distance (9a in Figure 3 to Figure 5). Preferably, the fixing component 4 is removable to enable re-adjustment of the positioning of the support component 2 relative to the second component (8 in Figure 3 to Figure 5) to increase/decrease the predefined distance (9a in Figure 3 to Figure 5).

The support component 2 illustratively comprises a support body 2a supporting the spacing component 3, and at least one attachment portion 2c, 2e configured to be rigidly mounted to the first component (7 in Figure 3 to Figure 5). By way of example, the support body 2a is embodied as a support ring with an inner thread 2b and, therefore, also referred to hereinafter as the "support ring 2a", for brevity and clarity.

Furthermore, the at least one attachment portion 2c, 2e is illustratively embodied as an attachment flange with at least one associated through hole 2d, 2f configured to receive attachment means, in particular attachment screws or bolts. By way of example, two attachment portions 2c, 2e are provided, each in the form of an attachment flange that extends away from the support ring 2a. Illustratively, the attachment portion 2c, which is hereinafter referred to as the "attachment flange 2c", for brevity and clarity, is provided with the through hole 2d, and the attachment portion 2e, which is hereinafter referred to as the "attachment flange 2e", for brevity and clarity, is provided with the through hole 2f.

The attachment flanges 2c, 2e may be formed integrally with the support ring 2a, i. e. as integral parts of a single piece. Alternatively, the attachment flanges 2c, 2e may be rigidly attached to the support ring 2a in any suitable manner.

Moreover, the support ring 2a preferably accommodates the spacing component 3 at least partly. Illustratively, the spacing component 3 is embodied as a threaded sleeve with an outer thread 3a and, therefore, also referred to hereinafter as the "threaded spacer 3", for brevity and clarity. The outer thread 3a of the threaded spacer 3 matches the inner thread 2b of the support ring 2a such that the threaded spacer 3 may be screwed into the inner thread 2b.

By way of example, the threaded spacer 3 which is embodied as a threaded sleeve comprises an inner through hole 3c and tightening slits 3b on diametrically opposed sides of the threaded sleeve. Thus, for instance a slotted screwdriver may be used for screwing the threaded spacer 3 by means of its outer thread 3a into, or out of, the inner thread 2b of the support ring 2a.

The threaded spacer 3 is blocked in the support ring 2a by means of the fixing component 4. Illustratively, the fixing component 4 is embodied as a counter nut with an inner thread 4a and referred to hereinafter as the "counter nut 4", for brevity and clarity.

The inner thread 4a of the counter nut 4 matches the outer thread 3a of the threaded spacer 3. Thus, the counter nut 4 may be screwed by means of its inner thread 4a onto the outer thread 3a of the threaded spacer 3 and blocked against the support ring 2a for blocking the threaded spacer 3 in the support ring 2a.

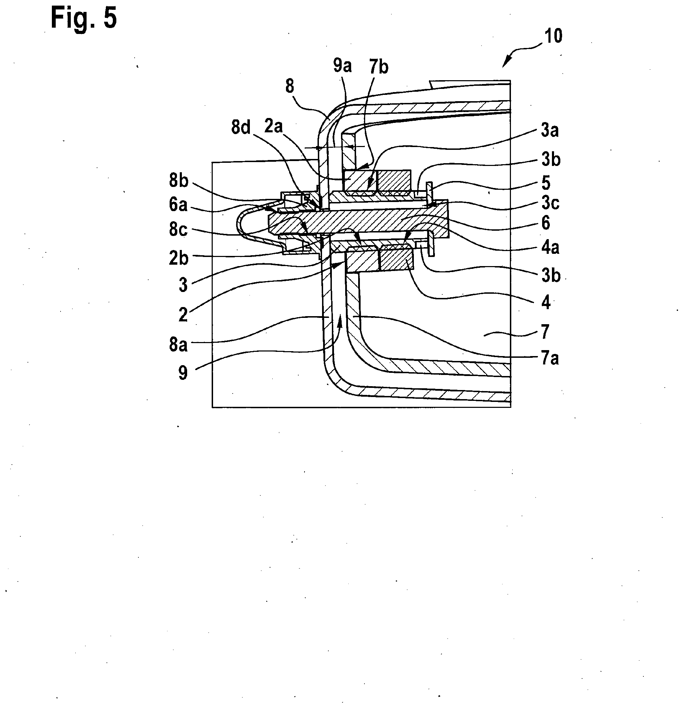

According to one aspect, a retaining element 5 and a mounting component 6 may be associated with the adjustable spacer 1. By way of example, the retaining element 5 is embodied as a washer and, therefore, referred to hereinafter as the "washer 5", for brevity and clarity. The mounting component 6, in turn, is illustratively embodied as a mounting screw with an outer thread 6a and, therefore, referred to hereinafter as the "mounting screw 6", for brevity and clarity. Use of the washer 5 and the mounting screw 6 is explained in detail below at Figure 5.

Figure 2 shows the support component 2 of Figure 1 with the threaded spacer 3 of Figure 1 for further illustrating the through holes 2d, 2f, and 3c. The support component 2 comprises the support ring 2a with the inner thread 2b and the attachment flanges 2c, 2e which are provided with the through holes 2d, 2f. The threaded spacer 3 comprises the outer thread 3a, the tightening slits 3b, and the inner through hole 3c.

It should be noted that the support component 2 is illustratively an essentially flat component. However, the support component 2 should not be restricted to a flat shape. Instead, the support component 2 may have other shapes, e. g. it may be arc-shaped or kinked, dependent on an intended use thereof, i. e. dependent on a shaping of a component to which it is mounted, such as component 7 in Figure 3 to Figure 5.

Figure 3 to Figure 5 show an illustrative use of the adjustable spacer 1 according to Figure 1 and Figure 2 for adjusting a spacing 9 between a first component 7 and a second component 8 to a predefined distance 9a. By way of example, the first component 7 and the second component 8 are assembled to form an arrangement 10.

For instance, the arrangement 10 may be a rotorcraft. In this case, the first component 7 may e. g. be a doorframe and the second component 8 may e. g. be a fuselage of the rotorcraft.

More specifically, according to Figure 3 the component 7 illustratively comprises a wall 7a with an opening 7b. The opening 7b accommodates at least partly the support ring 2a of the support component 2 of the adjustable spacer 1, which is provided with the threaded spacer 3 of the adjustable spacer 1. The support ring 2a is preferably rigidly attached to the wall 7a by means of the attachment flanges 2c, 2e of the adjustable spacer 1, which are, however, not visible due to the selected cutting line of the view.

The threaded spacer 3 is illustratively screwed into the inner thread 2b of the support ring 2a by means of its outer thread 3a such that the threaded spacer 3 extends at least partly through the support ring 2a toward a wall 8a of the component 8, which further comprises a mounting plug 8b with an inner thread 8c provided at an opening 8d in the wall 8a. More specifically, the threaded spacer 3 is screwed into the inner thread 2b of the support ring 2a until it abuts against the wall 8a.

The threaded spacer 3 may now be screwed further into the inner thread 2b of the support ring 2a to increase the spacing 9 between the walls 7a, 8a, or it may be screwed out of the inner thread 2b of the support ring 2a to decrease the spacing 9 between the walls 7a, 8a. The screwing of the threaded spacer 3 into or out of the inner thread 2b of the support ring 2a is performed until the spacing 9 is adjusted to the predefined distance 9a.

According to Figure 4, when the spacing 9 is adjusted to the predefined distance 9a, the threaded spacer 3 is locked in the support ring 2a by means of the counter nut 4 that comprises the inner thread 4a. To this end, the counter nut 4 is threaded by means of its inner thread 4a on the outer thread 3a of the threaded spacer 3 until it is blocked against the support ring 2a of the adjustable spacer 1. Thus, the spacing 9 between the components 7, 8, i. e. between the walls 7a, 8a is adjusted to the predefined distance 9a.

For reliably and securely locking the components 7, 8 in the arrangement 10 at the predefined distance 9a, the mounting screw 6 of the adjustable spacer 1 is now according to Figure 5 screwed into the mounting plug 8b. More specifically, the washer 5 of the adjustable spacer 1 is positioned on the threaded spacer 3 at the position of the tightening slits 3b and the mounting screw 6 is inserted through the washer 5, the inner through hole 3c of the threaded spacer 3, and the opening 8d in the wall 8a into the inner thread 8c of the mounting plug 8b, and tightened therein.

The washer 5 is configured for retaining the mounting screw 6 on the threaded spacer 3. Thus, the mounting screw 6 rigidly mounts the threaded spacer 3 to the component 8 after the locking of the threaded spacer 3 on the support ring 2a in the component 7.

Preferably, the mounting screw 6 is removable to enable re-adjustment of the positioning of the support ring 2a relative to the component 8, for instance if it is subsequently necessary to increase/decrease the predefined distance 9a. Accordingly, the counter nut 4 is preferably also removable to enable re-adjustment of the positioning of the support ring 2a relative to the component 8 at any time. Similarly, the threaded spacer 3 may be removable and also the support component 2 of the adjustable spacer 1.

### Reference List

- 1: adjustable spacer
- 2: spacer support
- 2a: support body part
- 2b: body part inner thread
- 2c, 2e: attachment flanges
- 2d, 2f: through holes
- 3: threaded spacer
- 3a: spacer outer thread
- 3b: tightening slits
- 3c: through hole
- 4: counter nut
- 4a: nut inner thread
- 5: washer
- 6: mounting screw
- 6a: screw outer thread
- 7: first component
- 7a: first component wall
- 7b: opening
- 8: second component
- 8a: second component wall
- 8b: mounting plug
- 8c: plug inner thread
- 8d: opening
- 9: spacing
- 9a: predefined distance
- 10: component arrangement

## Claims

1. An adjustable spacer (1) for adjusting a spacing (9) between a first component (7) and a second component (8) to a predefined distance (9a), comprising at least:
a support component (2) configured to be rigidly mounted to the first component (7);
a spacing component (3) movably mounted to the support component (2) for adjusting positioning of the support component (2) relative to the second component (8), and
a fixing component (4) configured for locking the spacing component (3) on the support component (2) after the positioning of the support component (2) relative to the second component (8) at the predefined distance (9a), **characterized in that** the spacing component (3) is embodied as a threaded sleeve with an outer thread (3a) and comprises tightening slits (3b).

2. The adjustable spacer (1) of claim 1, wherein the support component (2) comprises:
a support body (2a) supporting the spacing component (3); and
at least one attachment portion (2c, 2e) configured to be rigidly mounted to the first component (7).

3. The adjustable spacer (1) of claim 2,
wherein the support body (2a) is embodied as a support ring with an inner thread (2b).

4. The adjustable spacer (1) of claim 2 or 3,
wherein the at least one attachment portion (2c, 2e) is embodied as an attachment flange with at least one associated through hole (2d, 2f) configured to receive attachment means, in particular attachment screws or bolts.

5. The adjustable spacer (1) of any one of the preceding claims,
wherein the fixing component (4) is embodied as a counter nut (4) with an inner thread (4a).

6. The adjustable spacer (1) of any one of the preceding claims, wherein the fixing component (4) is removable to enable re-adjustment of the positioning of the support component (2) relative to the second component (8) to increase/decrease the predefined distance (9a).

7. The adjustable spacer (1) of any one of the preceding claims, further comprising a mounting component (6) configured for rigidly mounting the spacing component (3) to the second component (8) after the locking of the spacing component (3) on the support component (2).

8. The adjustable spacer (1) of claim 7, wherein the mounting component (6) is removable to enable re-adjustment of the positioning of the support component (2) relative to the second component (8) to increase/decrease the predefined distance (9a).

9. The adjustable spacer (1) of claim 7 or 8,
wherein the mounting component (6) is embodied as a mounting screw.

10. The adjustable spacer (1) of any one of claims 7 to 9, further comprising a retaining element (5) configured for retaining the mounting component (6) on the spacing component (3).

11. The adjustable spacer (1) of claim 10,
wherein the retaining element (5) is embodied as a washer.

12. The adjustable spacer (1) of any one of the preceding claims,
wherein the support component (2), the spacing component (3), and the fixing component (4) are exchangeable.

13. An arrangement (10) comprising:
a first component (7),
a second component (8), and
an adjustable spacer (1) according to any one of the preceding claims for adjusting a spacing (9) between the first component (7) and the second component (8) to a predefined distance (9a).

## Patentansprüche

1. Einstellbarer Abstandshalter (1) zum Einstellen eines Abstands (9) zwischen einem ersten Bauteil (7) und einem zweiten Bauteil (8) auf einen vordefinierten Abstand (9a), der mindestens umfasst:
ein Trägerbauteil (2), das konfiguriert ist, um starr an dem ersten Bauteil (7) angebracht zu werden;
ein Abstandsbauteil (3), das beweglich an dem Trägerbauteil (2) angebracht ist, um die Positionierung des Trägerbauteils (2) relativ zu dem zweiten Bauteil (8) einzustellen, und
ein Befestigungsbauteil (4), das zum Feststellen des Abstandsbauteils (3) an dem Trägerbauteil (2) nach der Positionierung des Trägerbauteils (2) relativ zu dem zweiten Bauteil (8) in dem vordefinierten Abstand (9a) konfiguriert ist; **dadurch gekennzeichnet, dass** das Abstandsbauteil (3) als Gewindehülse mit einem Außengewinde (3a) ausgebildet ist und Festziehschlitze (3b) umfasst.

2. Einstellbarer Abstandshalter (1) nach Anspruch 1, bei dem das Trägerbauteil (2) umfasst:
einen Trägerkörper (2a), der das Abstandsbauteil (3) trägt; und
mindestens einen Befestigungsabschnitt (2c, 2e), der konfiguriert ist, um starr an dem ersten Bauteil (7) befestigt zu werden.

3. Einstellbarer Abstandshalter (1) nach Anspruch 2,
bei dem der Trägerkörper (2a) als Trägerring mit einem Innengewinde (2b) ausgebildet ist.

4. Einstellbarer Abstandshalter (1) nach Anspruch 2 oder 3,
bei dem der mindestens eine Befestigungsabschnitt (2c, 2e) als Befestigungsflansch mit mindestens einem zugeordneten Durchgangsloch (2d, 2f) ausgebildet ist, das zur Aufnahme von Befestigungsmitteln, insbesondere Befestigungsschrauben oder -bolzen, konfiguriert ist.

5. Einstellbarer Abstandshalter (1) nach einem der vorhergehenden Ansprüche,
bei dem das Befestigungsbauteil (4) als Kontermutter (4) mit einem Innengewinde (4a) ausgebildet ist.

6. Einstellbarer Abstandshalter (1) nach einem der vorhergehenden Ansprüche, bei dem das Befestigungsbauteil (4) entfernbar ist, um zum Vergrößern/Verkleinern des vordefinierten Abstands (9a) eine Nachverstellung der Positionierung des Trägerbauteils (2) relativ zum zweiten Bauteil (8) zu ermöglichen.

7. Einstellbarer Abstandshalter (1) nach einem der vorhergehenden Ansprüche, ferner umfassend ein Montagebauteil (6), das zum starren Montieren des Abstandsbauteils (3) an dem zweiten Element (8) nach dem Verriegeln des Abstandsbauteils (3) an dem Trägerbauteil (2) konfiguriert ist.

8. Einstellbarer Abstandshalter (1) nach Anspruch 7, bei dem das Montagebauteil (6) entfernbar ist, um zum Vergrößern/Verkleinern des vordefinierten Abstands (9a) eine Neuanpassung der Positionierung des Trägerbauteils (2) relativ zum zweiten Bauteil (8) zu ermöglichen.

9. Einstellbarer Abstandshalter (1) nach Anspruch 7 oder 8,
bei dem das Montagebauteil (6) als Montageschraube ausgebildet ist.

10. Einstellbarer Abstandshalter (1) nach einem der Ansprüche 7 bis 9, der ferner ein Halteelement (5) umfasst, das zum Halten des Montagebauteils (6) an dem Abstandsbauteil (3) konfiguriert ist.

11. Einstellbarer Abstandshalter (1) nach Anspruch 10,
bei dem das Halteelement (5) als Unterlegscheibe ausgebildet ist.

12. Einstellbarer Abstandshalter (1) nach einem der vorhergehenden Ansprüche,
bei dem das Trägerbauteil (2), das Abstandsbauteil (3) und das Befestigungsbauteil (4) austauschbar sind.

13. Anordnung (10) umfassend:
ein erstes Bauteil (7),
ein zweites Bauteil (8) und
einen verstellbaren Abstandshalter (1) nach einem der vorhergehenden Ansprüche zum Einstellen eines Abstands (9) zwischen dem ersten Bauteil (7) und dem zweiten Bauteil (8) auf einen vordefinierten Abstand (9a).

## Revendications

1. Entretoise (1) réglable pour ajuster un espacement (9) entre un premier composant (7) et un second composant (8) à une distance (9a) prédéfinie, comprenant au moins :
un composant (2) de support configuré pour être monté de façon rigide sur le premier composant (7) ;
un composant (3) d'espacement monté de façon déplaçable sur le composant (2) de support afin d'ajuster le positionnement du composant (2) de support par rapport au second composant (8), et
un composant (4) de fixation, configuré pour verrouiller le composant (3) d'espacement sur le composant (2) de support après le positionnement du composant (2) de support par rapport au second composant (8) à la distance (9a) prédéfinie ; **caractérisée en ce que** le composant (3) d'espacement prend la forme d'un manchon fileté avec un filetage (3a) extérieur et comprend des fentes (3b) pour le serrage.

2. Entretoise (1) réglable selon la revendication 1, dans laquelle le composant (2) de support comprend :
un corps (2a) de support soutenant le composant (3) d'espacement ; et
au moins une partie (2c, 2e) de fixation configurée pour être montée de façon rigide sur le premier composant (7).

3. Entretoise (1) réglable selon la revendication 2,
dans laquelle le corps (2a) de support prend la forme d'un anneau de support avec un filetage (2b) intérieur.

4. Entretoise (1) réglable selon la revendication 2 ou 3,
dans laquelle ladite au moins une partie (2c, 2e) de fixation prend la forme d'une bride de fixation avec au moins un trou (2d, 2f) associé traversant configuré pour accueillir des moyens de fixation, en particulier des vis ou des boulons de fixation.

5. Entretoise (1) réglable selon l'une quelconque des revendications précédentes,
dans laquelle le composant (4) de fixation prend la forme d'un contre-écrou (4) avec un filetage (4a) intérieur.

6. Entretoise (1) réglable selon l'une quelconque des revendications précédentes, dans laquelle le composant (4) de fixation reste déplaçable afin de permettre un réajustement du positionnement du composant (2) de support par rapport au second composant (8) afin d'augmenter / de réduire la distance (9a) prédéfinie.

7. Entretoise (1) réglable selon l'une quelconque des revendications précédentes, comprenant en outre un composant (6) de montage configuré pour le montage de façon rigide du composant (3) d'espacement sur le second composant (8) après le verrouillage du composant (3) d'espacement sur le composant (2) de support.

8. Entretoise (1) réglable selon la revendication 7, dans laquelle le composant (6) de montage reste déplaçable afin de permettre le réajustement du positionnement du composant (2) de support par rapport au second composant (8) afin d'augmenter / de réduire la distance (9a) prédéfinie.

9. Entretoise (1) réglable selon la revendication 7 ou 8,
dans laquelle le composant (6) de montage prend la forme d'une vis de montage.

10. Entretoise (1) réglable selon l'une quelconque des revendications 7 à 9, comprenant en outre un élément (5) de maintien configuré pour maintenir le composant (6) de montage sur le composant (3) d'espacement.

11. Entretoise (1) réglable selon la revendication 10,
dans laquelle l'élément (5) de maintien prend la forme d'une rondelle.

12. Entretoise (1) réglable selon l'une quelconque des revendications précédentes,
dans laquelle le composant (2) de support, le composant (3) d'espacement, et le composant (4) de fixation sont échangeables.

13. Agencement (10) comprenant :
un premier composant (7),
un second composant (8), et
une entretoise (1) réglable selon l'une quelconque des revendications précédentes afin d'ajuster un espacement (9) entre le premier composant (7) et le second composant (8) selon une distance (9a) prédéfinie.
